# EUROPEAN PATENT SPECIFICATION

(11) **EP 2 448 792 B1**
(45) Date of publication and mention of the grant of the patent: **22.03.2017**
(21) Application number: 09779994.4
(22) Date of filing: 29.06.2009
(51) Int. Cl.: B60S 1/38

(54) **WINDSCREEN WIPER DEVICE**
SCHEIBENWISCHERVORRICHTUNG
DISPOSITIF D'ESSUIE-GLACE

(43) Date of publication of application: 09.05.2012
(73) Proprietor: Federal-Mogul S.A., 6790 Aubange (BE)
(72) Inventor: BOLAND, Xavier, B-6700 Arlon (BE)
(74) Representative: Hooiveld, Arjen Jan Winfried
(86) International application number: PCT/EP2009/058086
(87) International publication number: WO 2011/000402

(56) References cited:
- EP-A1- 1 512 594
- EP-A2- 0 301 773
- EP-A2- 1 247 707
- DE-A1- 10 025 629
- DE-A1- 10 025 630
- GB-A- 847 157
- JP-A- 2001 151 087

## Description

The present invention relates to a windscreen wiper device comprising an elastic, elongated carrier element, as well as an elongated wiper blade of a flexible material, which can be placed in abutment with a windscreen to be wiped, which wiper blade includes at least one longitudinal groove, in which groove at least one longitudinal strip of the carrier element is disposed, which windscreen wiper device comprises a connecting device for an oscillating arm, wherein said oscillating arm is pivotally connected to said connecting device about a pivot axis near one end thereof.

Such a windscreen wiper device is generally known. This prior art windscreen wiper device is designed as a so-called "flat blade" or "yokeless blade", wherein no use is made of several yokes pivotally connected to each other, but wherein the wiper blade is biassed by the carrier element, as a result of which it exhibits a specific curvature.

The object of the invention is to provide an improved windscreen wiper device.

In order to accomplish that objective, a windscreen wiper device according to claim 1 and a process for manufacturing a windscreen wiper device according to claim 7 are provided.

According to the invention the windscreen wiper of the preamble of claim 1 is provided with a substance on an inner wall of said groove in order to lower the friction coefficient between contact surfaces of said longitudinal strip and said inner wall. Accordingly, due to this low friction coefficient, a slight movement of the wiper blade relative to the longitudinal strip is made possible in order to allow said wiper blade to follow any curvature of the windscreen to be wiped. Further, due to this low friction coefficient, adherence ("sticking") of said wiper blade onto said longitudinal strip in case the windscreen wiper device in practice is exposed to high temperatures, is avoided. It goes without saying that such an adherence would seriously affect the wiping properties of the wiper blade.

It is noted that the present invention is not restricted to the use of only one longitudinal strip forming the elastic carrier element that is particularly located in a central longitudinal groove or "cavity" of the wiper blade. Instead, said carrier element may also comprise two longitudinal strips, wherein said strips are disposed in opposite longitudinal grooves of the wiper blade.

Said substance is particularly applied onto said inner wall so as to form a line bond with said inner wall of said cavity. In that case said line extending in longitudinal direction forms a line of contact with said longitudinal strip. In the alternative said substance is spread uniformly over said inner wall. Also other forms of said bond/contact would be possible. More in particular, said substance extends partly inside the material of said inner wall.

In a preferred embodiment of a windscreen wiper device in accordance with the invention said friction coefficient is smaller than 1, preferably smaller than 0,7, more preferably smaller than 0,5.

According to the invention said substance is a thermoplastic material. Particularly, said thermoplastic material is made from at least one material selected from the group consisting of polyethylene (PE), polypropylene (PP) and ultra high molecular weight polyethylene (UHMWPE).

According to the invention said substance is co-extruded with the material of the inner wall of said groove. The invention also relates to a process for manufacturing a windscreen wiper device as claimed in independent claim 7.

According to the invention said substance in the form of particles of a thermoplastic material is co-extruded with the material of the inner wall of said groove. More in particular, said particles have a size varying between 20 µ and 200 µ.

In a preferred embodiment of a process in accordance with the invention said substance is provided inside the material of the inner wall of said groove through a channel of an extruder die forming said groove. According to the invention said substance will the chemically be bonded/linked with the rubber of the wiper blade after curing.

The invention will now be explained more in detail with reference to figures illustrated in a drawing, wherein
- figure 1 is a perspective, schematic view of a preferred embodiment of a windscreen wiper device according to the invention;
- figure 2 is a cross-sectional view of a rubber element of a wiper blade, as used in a windscreen wiper device of figure 1, during manufacturing thereof; and
- figure 3 is a cross-sectional view of a wiper blade according to an alternative embodiment.

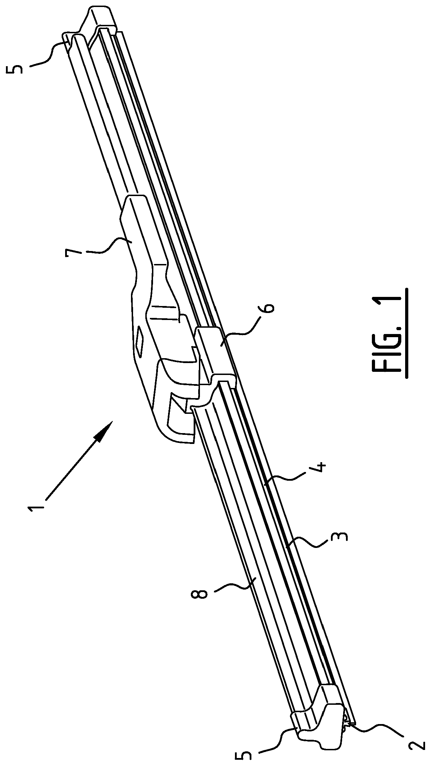

Figure 1 shows a preferred variant of a windscreen wiper device 1 according to the invention. Said windscreen wiper device is built up of an elastomeric wiper blade 2 comprising a central longitudinal groove 3, wherein a longitudinal strip or "flexor" 4 made of spring band steel is fitted in said longitudinal groove 3. Said strip 4 forms a flexible carrier element for the rubber wiper blade 2, as it were, which is thus biassed in a curved position (the curvature in operative position being that of a windscreen to be wiped). An end of said strip 4 is connected on either side of the windscreen wiper device 1 to respective connecting pieces or "end caps" 5 functioning as closing parts. In this embodiment, the connecting pieces 5 are separate constructional elements, which may be form-locked as well as force-locked to both ends of said strip 4. In another preferred variant, said connecting pieces 5 are in one piece with the strip 4 made of spring band steel. The windscreen wiper device 1 is furthermore built up of a connecting device 6 for connecting an oscillating wiper arm 7 thereto. The oscillating wiper arm 7 is pivotally connected to the connecting device 6 about a pivot axis near one end. The preferred embodiment of figure 1 according to the invention comprises a spoiler or "air deflector" 8 which is made in one piece with the rubber wiper blade 2.

Although not shown in figure 1, but fully understood by a skilled person, said oscillating arm 7 is connected to a mounting head fixed for rotation to a shaft driven by a small motor. In use, the shaft rotates alternately in a clockwise and in a counter-clockwise sense carrying the mounting head into rotation also, which in turn draws said oscillating arm 7 into rotation and by means of said connecting device 6 moves said wiper blade 2.

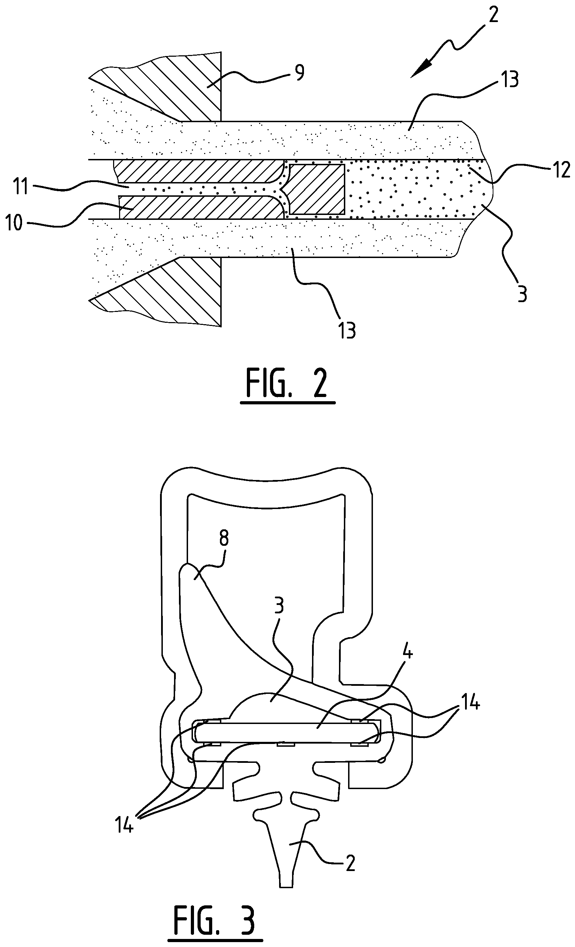

Figure 2 shows a cross-sectional view of the wiper blade 2 of figure 1 during manufacturing thereof, wherein a die or mould is used having an outer part 9 and an inner part or core 10. Said core 10 is meant for forming the central groove or cavity 3 for the longitudinal strip 4. Said core 10 comprises a channel 11, so that thermoplastic particles 12 can be transported thereto to bond with the elastomeric material of the inner wall 13 of said cavity 3 during and after curing. Said particles 12 allow a lowering of the friction coefficient between contact surfaces of said longitudinal strip 4 and said inner wall 13. Thus, a slight movement of the wiper blade 2 relative to the longitudinal strip 4 is made possible in order to allow said wiper blade 2 to follow any curvature of the windscreen to be wiped. Adherence ("sticking") of said wiper blade 2 onto said longitudinal strip 4 in case the windscreen wiper device 1 in practice is exposed to high temperatures, is avoided. In the alternative, said particles 12 create one or several line(s) of contact (14) with the longitudinal strip 4 (figure 3).

The invention is not restricted to the variants shown in the drawing, but it also extends to other preferred embodiments that fall within the scope of the appended claims.

## Claims

1. A windscreen wiper device (1) comprising an elastic, elongated carrier element, as well as an elongated wiper blade (2) of a flexible elastomeric rubber material, which can be placed in abutment with a windscreen to be wiped, which wiper blade (2) includes at least one longitudinal groove (3), in which groove (3) at least one longitudinal strip (4) of the carrier element is disposed, which windscreen wiper device (1) comprises a connecting device (6) for an oscillating arm (7), wherein said oscillating arm (7) is pivotally connected to said connecting device (6) about a pivot axis near one end thereof, wherein a substance is provided on an inner wall (13) of said groove (3) in order to lower the friction coefficient between contact surfaces of said longitudinal strip (4) and said inner wall (13), **characterized in, that** said substance is a thermoplastic material co-extruded with the elastomeric rubber material of the inner wall (13) of said groove (3) and chemically bonded with the elastomeric rubber material after curing of the elastomeric rubber material.

2. A windscreen wiper device according to claim 1, wherein said substance is applied onto said inner wall (13) along a line in longitudinal direction in order to form a line of contact (14) with said longitudinal strip (4) .

3. A windscreen wiper device (1) according to claim 1 or 2, wherein said friction coefficient is smaller than 1, preferably smaller than 0,7, more preferably smaller than 0,5.

4. A windscreen wiper device (1) according to claim 1, 2 or 3, wherein said thermoplastic material is made from at least one material selected from the group consisting of polyethylene (PE), polypropylene (PP) and ultra high molecular weight polyethylene (UHMWPE).

5. A windscreen wiper device (1) according to any of the preceding claims 1 through 4, wherein said carrier element consists of one longitudinal strip (4) disposed in a central longitudinal groove (3) of said wiper blade (2).

6. A windscreen wiper device (1) according to any of the preceding claims 1 trough 4,
wherein said carrier element consists of two longitudinal strips (4) disposed in opposing longitudinal grooves (3) of said wiper blade (2).

7. A process for manufacturing a windscreen wiper device (1) comprising an elastic, elongated carrier element, as well as an elongated wiper blade (2) of a flexible elastomeric rubber material, which can be placed in abutment with a windscreen to be wiped, which wiper blade (2) includes at least one longitudinal groove (3), in which groove (3) at least one longitudinal strip (4) of the carrier element is disposed, which windscreen wiper device (1) comprises a connecting device (6) for an oscillating arm (7), wherein said oscillating arm (7) is pivotally connected to said connecting device (6) about a pivot axis near one end thereof, wherein a substance is provided onto an inner wall (13) of said groove (3) in order to lower the friction coefficient between contact surfaces of said longitudinal strip (4) and said inner wall (13), **characterized in, that** said substance in the form of particles of a thermoplastic material is co-extruded with the elastomeric rubber material of the inner wall (13) of said groove (3) and chemically bonded with the elastomeric rubber material after curing of the elastomeric rubber material.

8. A process according to claim 7, wherein said substance is provided inside the rubber material of the inner wall (13) of said groove (3) through a channel (11) of a mould (10) forming said groove (3).

9. A process according to claim 7 or 8, wherein said substance is applied onto said inner wall (13) along a line extending in longitudinal direction in order to form a line of contact (14) with said longitudinal strip (4).

## Patentansprüche

1. Scheibenwischvorrichtung (1), die ein elastisches, längliches Trägerelement sowie ein längliches Wischerblatt (2) aus einem flexiblen elastomeren Gummimaterial, das in Anlage mit einer zu wischenden Windschutzscheibe gebracht werden kann, umfasst, wobei das Wischerblatt (2) mindestens eine Längsnut (3) umfasst, wobei in der Nut (3) mindestens ein Längsstreifen (4) des Trägerelements angeordnet ist, wobei die Scheibenwischvorrichtung (1) eine Verbindungsvorrichtung (6) für einen Schwenkarm (7) umfasst, wobei der Schwenkarm (7) mit der Verbindungsvorrichtung (6) um eine Schwenkachse nahe einem Ende davon schwenkbar verbunden ist, wobei ein Stoff auf einer Innenwand (13) der Nut (3) bereitgestellt ist, um den Reibungskoeffizienten zwischen Kontaktflächen des Längsstreifens (4) und der Innenwand (13) zu verringern, **dadurch gekennzeichnet, dass** der Stoff ein thermoplastisches Material ist, das mit dem elastomeren Gummimaterial der Innenwand (13) der Nut (3) koextrudiert wird und nach Aushärten des elastomeren Gummimaterials mit dem elastomeren Gummimaterial chemisch gebunden ist.

2. Scheibenwischvorrichtung nach Anspruch 1, wobei der Stoff entlang einer Linie in Längsrichtung auf die Innenwand (13) aufgetragen wird, um eine Berührungslinie (14) mit einem Längsstreifen (4) zu bilden.

3. Scheibenwischvorrichtung (1) nach Anspruch 1 oder 2, wobei der Reibungskoeffizient kleiner als 1, vorzugsweise kleiner als 0,7, insbesondere kleiner als 0,5, ist.

4. Scheibenwischvorrichtung (1) nach Anspruch 1, 2 oder 3, wobei das thermoplastische Material aus mindestens einem Material aus der Gruppe bestehend aus Polyethylen (PE), Polypropylen (PP) und Polyethylen mit ultrahohem Molekulargewicht (UHMWPE) hergestellt ist.

5. Scheibenwischvorrichtung (1) nach einem der vorhergehenden Ansprüche 1 bis 4, wobei das Trägerelement aus einem Längsstreifen (4) besteht, der in einer zentralen Längsnut (3) des Wischerblatts (2) angeordnet ist.

6. Scheibenwischvorrichtung (1) nach einem der vorhergehenden Ansprüche 1 bis 4, wobei das Trägerelement aus zwei Längsstreifen (4) besteht, die in entgegengesetzten Längsnuten (3) des Wischerblatts (2) angeordnet sind.

7. Verfahren zum Herstellen einer Scheibenwischvorrichtung (1), die ein elastisches, längliches Trägerelement sowie ein längliches Wischerblatt (2) aus einem flexiblen elastomeren Gummimaterial, das in Anlage mit einer zu wischenden Windschutzscheibe platziert werden kann, umfasst, wobei das Wischerblatt (2) mindestens eine Längsnut (3) umfasst, wobei in der Längsnut (3) mindestens ein Längsstreifen (4) des Trägerelements angeordnet ist, wobei die Wischvorrichtung (1) eine Verbindungsvorrichtung (6) für einen Schwenkarm (7) umfasst, wobei der Schwenkarm (7) mit der Verbindungsvorrichtung (6) um eine Schwenkachse nahe einem Ende davon schwenkbar verbunden ist, wobei der Stoff auf einer Innenwand (13) der Nut (3) bereitgestellt ist, um den Reibungskoeffizienten zwischen Berührungsflächen des Längsstreifens (4) und der Innenwand (13) zu verringern, **dadurch gekennzeichnet, dass** der Stoff in Form von Partikeln eines thermoplastischen Materials mit dem elastomeren Gummimaterial der Innenwand (13) der Nut (3) koextrudiert wird und nach Aushärten des elastomeren Gummimaterials mit dem elastomeren Gummimaterial chemisch gebunden ist.

8. Verfahren nach Anspruch 7, wobei der Stoff innerhalb des Gummimaterials der Innenwand (13) der Nut (3)durch einen Kanal (11) einer Gießform (10) bereitgestellt wird und die Nut (3) bildet.

9. Verfahren nach Anspruch 7 oder 8, wobei der Stoff entlang einer sich in Längsrichtung erstreckenden Linie auf die Innenwand (13) aufgetragen wird, um eine Berührungslinie (14) mit dem Längsstreifen (4) zu bilden.

## Revendications

1. Dispositif d'essuie-glace (1) comprenant un élément de support allongé élastique, ainsi qu'un balai d'essuie-glace allongé (2) réalisé avec un matériau en caoutchouc élastomère flexible, qui peut être placé en butée contre un pare-brise à essuyer, lequel balai d'essuie-glace (2) comprend au moins une rainure longitudinale (3), dans laquelle rainure (3), est disposée au moins une bande longitudinale (4) de l'élément de support, lequel dispositif d'essuie-glace (1) comprend un dispositif de raccordement (6) pour un bras oscillant (7), dans lequel ledit bras oscillant (7) est raccordé de manière pivotante audit dispositif de raccordement (6) autour d'un axe de pivot à proximité de son extrémité, dans lequel une substance est prévue sur une paroi interne (13) de ladite rainure (3) afin d'abaisser le coefficient de friction entre les surfaces de contact de ladite bande longitudinale (4) et ladite paroi interne (13), **caractérisé en ce que** ladite substance est un matériau thermoplastique co-extrudé avec le matériau en caoutchouc élastomère de la paroi interne (13) de ladite rainure (3) et chimiquement reliée avec le matériau en caoutchouc élastomère après durcissement du matériau en caoutchouc élastomère.

2. Dispositif d'essuie-glace selon la revendication 1, dans lequel ladite substance est appliquée sur ladite paroi interne (13) le long d'une ligne dans la direction longitudinale afin de former une ligne de contact (14) avec ladite bande longitudinale (4).

3. Dispositif d'essuie-glace (1) selon la revendication 1 ou 2, dans lequel ledit coefficient de friction est inférieur à 1, de préférence inférieur à 0,7, encore de préférence inférieur à 0,5.

4. Dispositif d'essuie-glace (1) selon la revendication 1, 2 ou 3, dans lequel ledit matériau thermoplastique est réalisé à partir d'au moins un matériau sélectionné dans le groupe comprenant le polyéthylène (PE), le polypropylène (PP) et le polyéthylène à poids moléculaire ultra élevé (UHMWPE).

5. Dispositif d'essuie-glace (1) selon l'une quelconque des revendications 1 à 4, dans lequel ledit élément de support se compose d'une bande longitudinale (4) disposée dans une rainure longitudinale centrale (3) dudit balai d'essuie-glace (2).

6. Dispositif d'essuie-glace (1) selon l'une quelconque des revendications 1 à 4, dans lequel ledit élément de support se compose de deux bandes longitudinales (4) disposées dans des rainures longitudinales (3) opposées dudit balai d'essuie-glace (2).

7. Procédé pour fabriquer un dispositif d'essuie-glace (1) comprenant un élément de support allongé élastique, ainsi qu'un balai d'essuie-glace allongé (2) réalisé avec un matériau en caoutchouc élastomère flexible, qui peut être placé en butée contre un pare-brise à essuyer, lequel balai d'essuie-glace (2) comprend au moins une rainure longitudinale (3), dans laquelle rainure (3), est disposée au moins une bande longitudinale (4) de l'élément de support, lequel dispositif d'essuie-glace (1) comprend un dispositif de raccordement (6) pour un bras oscillant (7), dans lequel ledit bras oscillant (7) est raccordé de manière pivotante audit dispositif de raccordement (6) autour d'un axe de pivot à proximité de son extrémité, dans lequel une substance est prévue sur une paroi interne (13) de ladite rainure (3) afin d'abaisser le coefficient de friction entre les surfaces de contact de ladite bande longitudinale (4) et ladite paroi interne (13), **caractérisé en ce que** ladite substance sous forme de particules de matériau thermoplastique est co-extrudée avec le matériau en caoutchouc élastomère de la paroi interne (13) de ladite rainure (3) et chimiquement reliée avec le matériau en caoutchouc élastomère après durcissement du matériau en caoutchouc élastomère.

8. Procédé selon la revendication 7, dans lequel ladite substance est prévue à l'intérieur du matériau en caoutchouc de la paroi interne (13) de ladite rainure (3) par le biais d'un canal (11) d'un moule (10) formant ladite rainure (3).

9. Procédé selon la revendication 7 ou 8, dans lequel ladite substance est appliquée sur ladite paroi interne (13) le long d'une ligne s'étendant dans la direction longitudinale afin de former une ligne de contact (14) avec ladite bande longitudinale (4).
